# EUROPEAN PATENT APPLICATION

(11) **EP 0 790 588 A1**
(43) Date of publication of application: **20.08.1997**
(21) Application number: 96200324.0
(22) Date of filing: 12.02.1996
(51) Int. Cl.: G07F 7/10

(54) **Method of securely storing and retrieving monetary data**

(71) Applicant: Koninklijke PTT Nederland N.V., 2509 CH Den Haag (NL)
(72) Inventor: De Rooij, Peter Jacobus Nicolaas, NL-2264 XZ Leidschendam (NL); Bosselaers, Antoons Wilfried Jan, 3000 Leuven (BE)
(74) Representative: Beitsma, Gerhard Romano

(57) **Abstract**

The invention provides a method of securely storing and retrieving monetary values, such as electronic cheques and electronic coins. In an interactive protocol between an issuer (I) and a recipient (R) of electronic money, authentication values (A, B, ...) are produced and are stored in an external storage (S). At a later stage, the protocol is repeated between the recipient (R) and the storage (S), using the stored authentication values.

## Description

### BACKGROUND OF THE INVENTION

The present invention relates to the storing and retrieving of monetary data. More specifically, the present invention relates to the storing of monetary data, such as data identifying electronic cheques and electronic coins, in a storage medium, and to the later retrieval of the stored data by a means for electronic financial transactions, such as a so-called smart card.

Electronic cheques and coins necessarily take up a fair amount of memory space, as they comprise various authentication data, such as a signature from a bank (issuer). As the storage capacity of a smart card is usually limited, the need arises to externally store data which ensure the validity of electronic money. However, it must be assured that the data retrieved from storage can be trusted, i.e. are valid data. To this end it is possible to arrange for an on-line protocol with issuer each time data are loaded from storage. This is however time-consuming and often involves communications costs.

### SUMMARY OF THE INVENTION

It is an object of the present invention to provide a method for safely storing and retrieving data, such as monetary data, in which the retrieval of data may be executed off-line. It is a further object of the present invention to provide a method which is independent of the specific type of data, such as electronic cheques or coins. It is a still further object of the invention to provide a method in which the validity of monetary data may be derived from an interactive protocol.

To this end, the present invention provides a method of securely storing and retrieving data, the method comprising a first phase comprising an interaction between an issuer and a recipient, data comprising authentication values being stored in a storage, and a second phase comprising an interaction between the storage and the recipient, data being retrieved from the storage and being verified by means of the authentication values and at least one authentication value stored in the recipient.

By substantially repeating in the sewcond phase the interaction of the first phase, a secure protocol may be achieved.

Preferably, a first authentication value comprises a commitment produced by the issuer. Such a commitment, for example comprising an electronic signature, allows valid electronic money to be used.

Advantageously, in the second phase the storage verifies the authentication value received from the recipient.

The method of the present invention thus allows the validity of (monetary) data to be derived from an interactive porotocol between an issuer and a recipient, but does not require an interaction with the issuer while retrieving stored data.

### BRIEF DESCRIPTION OF THE DRAWINGS

Fig. 1 shows schematically a system for electronic payments in which the invention may be applied.

Fig. 2 shows schematically the method according to the present invention.

### EXEMPLARY EMBODIMENTS

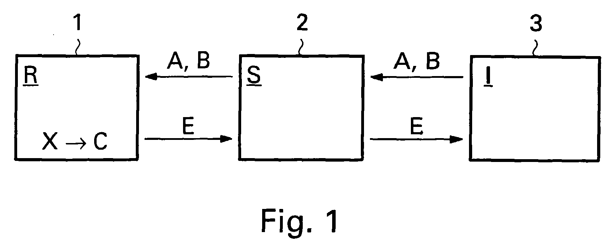

The system shown by way of example in Fig. 1 comprises a card 1, a wallet 2 and a terminal 3. The card 1 is a so-called smart card or IC card, comprising a card-shaped substrate and an integrated circuit. The integrated circuit comprises a memory for storing payment data and a processor for performing data processing, e.g. accessing the memory and cryptographically protecting the payment data.

The so-called electronic wallet 2 is a device for interacting with the card 1. The wallet has a keyboard, a slot for inserting a card 1, means for communicating with the inserted card, and means for communicating with an external terminal, such as the terminal 3. The wallet 2 allows a user to interact with the card 1 and to e.g. check balances, transfer balances between accounts, authorize payments, and the like. The wallet also provides a storage for storing electronic cheques, coins and the like, and thus acts as a storage extension for the card.

The terminal 3 may comprise an electronic cash register or the like, or at least a device for interacting with the card 1 and/or wallet 2. The terminal 3 may comprise a card reader and/or an infra-red card interface for communicating with the card (possibly via the wallet). The terminal 3 may further comprise means for establishing an on-line connection with a money issuing institution, such as a bank, and a secure module for securely storing monetary values or the like.

In the following text, it will be assumed that the terminal 3 acts as an issuer (I) of electronic money, such as electronic cheques and coins, while the card 1 acts as recipient (R) of the monetary data (D) representing electronic money. The electronic wallet is used as storage (S) for electronic money not stored on the card. It will be understood that the word "money" in this text is meant to comprise various representations of monetary and other values, and specifically comprises electronic cheques and coins. In the following, the terms "monetary data" or just "data" will be used to indicate data related to "money", and especially data representing electronic cheques and coins.

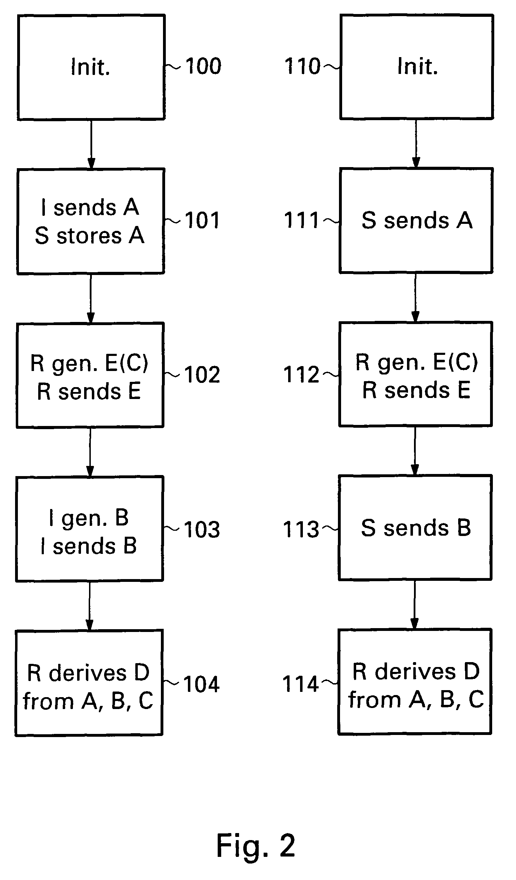

In the method of the invention, the issuer I and the recipient R exchange messages (M) as indicated in Fig. 2. In summary, the recipient R generates an identification value, performs an interactive protocol with the issuer I while storing the relevant data in the storage S, and discards the data while keeping sufficient data to regenerate the identification value. When retrieving the data, the identification value is regenerated, the interactive protocol is performed with the storage S rather than with the issuer I, and the relevant data D are stored in the recipient R. The identification value and the initial value (seed) for regenerating the identification value may then be discarded. It will be understood that instead of a value for regenerating the identification value, the identification value itself may be temporarily stored.

In the following, it will be assumed that the data exchange between the issuer I and the recipient R takes place via the storage S, i.e all data pass through the storage S. This reflects the situation in which a terminal (I) and a card (R) communicate via a wallet (S). It will be understood that it is just as well possible for the issuer I and the recipient R to communicate directly and to copy the relevant exchanged data to the storage.

In the method as depicted in Fig. 2, the generation of monetary data (such as electronic cheques) is initiated in step 100, for instance by the recipient R (a card) sending a relevant request to the issuer I (a terminal). In step 101, the issuer I generates an commitment A associated with one or more monetary values (cheques and/or coins). This commitment may be produced by generating a random value W and using a discrete exponentiation modulo p with generator g of the order q, where q divides p-1 and where p and q are predetermined numbers: ${\text{A = g}}^{\text{W}} \text{mod p}$. The commitment A is sent to the recipient R, in this example via the storage S which stores the commitment A. The commitment A may be temporarily stored in the recipient R.

In step 102, upon receiving the commitment A, the recipient R generates an identification value C. This is for example a random number, generated on the basis of a seed X. Subsequently, the recipient R generates a "fingerprint" E of the identification value C, for example by subjecting the combination of the identification value C and the commitment A to a so-called hash function: $\text{E = h(A,C)}$. This fingerprint E, which uniquely identifies the identification value C but from which the value C cannot be derived, is sent to the issuer I.

In step 103, the issuer I uses the received fingerprint E to produce a value B, for example by multiplying the fingerprint E by a secret key K_{S} modulo q and adding the result to the previously used random value W: ${\text{B = W + E.K}}_{\text{S}} \text{mod q}$. The value B thus derived is sent to the recipient R and is stored in the storage S. Together with the value B, associated data D may be transferred to the storage S and the recipient R. In step 104, the data D are derived from the values A, B, C and the public key K_{P} associated with the secret key K_{S}. The data D may further be verified using the same values, for example by verifying ${\text{g}}^{\text{B}} {\text{= A.K}}_{\text{P}} {}^{\text{E}} \text{mod p}$. The seed X, or alternatively the identification value C, is stored by the recipient R. Further data, including the data D and the values A, B and C, may now be discarded, as the generation part of the method is completed.

The reconstruction part of the method is initiated by the recipient R in step 110. In step 111 the commitment A is retrieved from the storage S. In step 112, the identification value C is regenerated on the basis of the seed X. The fingerprint E of the identification value C is also regenerated, for example by subjecting the combination of the identification value C and the commitment A to a so-called hash function: $\text{E = h(A,C)}$. This fingerprint E, which uniquely identifies the identification value C but from which the value C cannot be derived, is sent to the storage S.

In step 113, the stored value B is retrieved by means of the fingerprint E, which uniquely identifies the corresponding stored value. Optionally, the fingerprint E can be checked by verifying ${\text{g}}^{\text{B}} {\text{= A.K}}_{\text{P}} {}^{\text{E}} \text{mod p}$. Subsequently, in step 114 the retrieved value B is used to regenerate the data D from A, B, C and the public key K_{P} of the issuer I. The validity of the thus regenerated data D may further be verified using the same values, for example by verifying ${\text{g}}^{\text{R}} {\text{= A.K}}_{\text{P}} {}^{\text{E}} \text{mod p}$.

In the above method, the data D are generated on-line and regenerated off-line. The method thus offers the possibility of regenerating data D without the need to involve the issuer I. The fingerprint E ensures that the relevant data are uniquely identified. With the aid of the keys K_{S} and K_{P}, a further protection of the data is achieved.

In the above example, an electronic wallet has been shown as an example of an external storage. The invention may also be used with other types of storage, such as another card or other terminal.

It will be understood by those skilled in the art that the embodiments described above are given by way of example only and that many modifications and additions are possible without departing from the scope of the present invention.

## Claims

1. Method of securely storing and retrieving data, the method comprising a first phase comprising an interaction between an issuer (I) and a recipient (R), data comprising authentication values (A, B) being stored in a storage (S), and a second phase comprising an interaction between the storage (S) and the recipient (R), data being retrieved from the storage (S) and being verified by means of the authentication values (e.g. A, B) and at least one authentication value (C) stored in the recipient (R).

2. Method according to claim 1, in which a first authentication value (A) comprises a commitment produced by the issuer.

3. Method according to claim 1 or 2, in which a second authentication value (E) comprises a fingerprint of the authentication value (C) stored in the recipient (R).

4. Method according to claim 3, in which instead of the authentication value (C) a value from which the authentication value can be regenerated is stored in the recipient.

5. Method according to any of the preceding claims, in which the third authentication value (B) is produced by the issuer (I) on the basis of the second authentication value (E) and secret data, such as a key.

6. Method according to any of the preceding claims, in which in the second phase the retrieved data (A, B, ...) are used to regenerate monetary data.

7. Method according to claim 6, in which the regenerated data are verified by means of the issuer's (I) public key.

8. Method according to any of the preceding claims, in which the recipient (R) is constituted a smart card and the storage (S) is constitited by an electronic wallet.

9. Electronic cheque, regenerated by means of the method according to any of the preceding claims.

10. System for electronic monetary transactions, arranged for storing and retrieving data according to any of the claims 1 through 9.
